## Europäisches Patentamt

## European Patent Office

## Office européen des brevets

(11) Publication number: **0 178 742**
**B1**

(12) **EUROPEAN PATENT SPECIFICATION**

(45) Date of publication of patent specification: **29.08.90**

(21) Application number: **85201705.2**

(22) Date of filing: **17.10.85**

(51) Int. Cl.⁵: **G 09 B 29/10**

(54) **Apparatus for projecting slides carrying map information on several scales.**

(30) Priority: **19.10.84 NL 8403193**

(43) Date of publication of application:
**23.04.86 Bulletin 86/17**

(45) Publication of the grant of the patent:
**29.08.90 Bulletin 90/35**

(84) Designated Contracting States:
**AT BE CH DE FR GB IT LI LU NL SE**

(56) References cited:
**DE-A-2 658 855**
**DE-A-3 138 874**
**DE-B-1 245 604**
**FR-A-2 447 068**
**NL-A-6 817 810**
**US-A-3 848 980**

**The file contains technical information
submitted after the application was filed and
not included in this specification**

(73) Proprietor: **United Overseas Technology, Ltd.
Cedarhouse 41 Cedar Avenue
Hamilton HM 12 (BM)**

(72) Inventor: **Jerie, Hans Georg
Vanekerstraat 257
NL-7523 HP Enschede (NL)**

(74) Representative: **Schumann, Bernard Herman
Johan et al
OCTROOIBUREAU ARNOLD & SIEDSMA
Sweelinckplein 1
NL-2517 GK The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a system for projecting map information carried by a transparency film, said system comprising: a carrier for said film, at least two maps of the same area in transparency form being arranged on said film, said maps having preselected relative positions, an illumination device positioned at the one side of said film, and an optical projection system positioned at the other side of said film for displaying a part having a previously chosen, fixed area of a map to be chosen.

Such a system is particularly usable in a car. Dependent upon the circumstances and the type of information required the driver wishes to be able to observe a map segment showing the environment of his momentary position (or any other relevant position), be it on a larger scale (so that the driver can see a small area, particularly the direct environment, with a large degree of details), or on a smaller scale, so that the driver can observe a much larger area, therefore a larger environment, at the expense of the details.

Such an apparatus is known from US—A—4 097 134 in the name of the same inventor. In this prior art system use is made of a multiple and/or variable, and therefore complicated and expensive optical projection system, comprising one partial system for every map of the same region, in which one partial system, serving for projection of a survey map, is fixedly positioned and the or each partial system has a different magnification and is movable.

As said, the known system requires a complicated construction and is, therefore, expensive. A further disadvantage is that while using the survey map the position indication will, generally, not appear in the center of the projection screen.

The invention has for its purpose to remedy the mentioned limitations and shortcomings of the prior art and thereto provides a system of the type set forth in the preamble, being characterized by a memory in which the relative positions and the ratios of the scale factors of said maps are stored; reading means connected to said memory; hand operating means for adjusting a part of a map to be displayed; hand-operable switching means for selectively displaying a part of a chosen map and switching to another map, said maps having different scales; and displacement means controlled by said reading means, said manually operable means and said switching means for relative displacement of said film and said optical projection system, in such a way that when switching from the one map to another map by operating said switching means any position on said one map is uniquely related with the corresponding position on any one of the other maps, said projection system comprising one single lens unit having a fixed magnification.

Furthermore reference is made to DE—B—1 245 604. From this prior art specification a map display apparatus is known which is provided with optical means having two different magnification factors.

Furthermore reference is made to NL—A—6 817 810. From this prior art specification a display system for maps is known comprising a map arranged on a suitable material, and a projection/display device having a positioning device for the map, by means of which a part to be chosen of the map can be displayed, preferably on an enlarged scale. According to this specification the designer has specifically thought of a system provided with a viewer, which are usual for observing transparencies; however this system is specifically adapted to display an adjustable part of a map arranged on a transparency or a film, in which furthermore the viewer is provided with means to continuously shift from the one part of a map to an arbitrary other part.

From the above discussion it will be clear, that none of the prior art references discussed herein above suggest the use of one single optical system having a fixed magnification and the use of switching means adapted to switch from the one map on a transparency to another map, the control taking place in such a way that when switching from the one map to another the displayed center of the image corresponds to the same actual position on the map.

The control or operating means can be designed as a digital transducer e.g. operable by means of a joy-stick, in such a way that in both x- and y-directions a pulse rate can be adjusted, so that the speed and the direction of displacement of the map projection on a display screen can be chosen. Also use may be made of analog techniques.

Use is made of a special arrangement on a film carrying two or more maps of the same region on different scales. The film may like a transparancy, be received between two transparent platens and/or e.g. in a cartridge.

The transducer mentioned already allows the continuous shifting of the displayed map segment.

Furthermore use is made of a mechanical or electronic, analog or digital, computing apparatus, that is adapted for automatical switching between any position on one of the maps and the same position on a map having a different scale, under control of a manually operable switch.

Said cartridge may comprise in a very compact form a large number of said film arrangements, corresponding to map regions. The cartridge may be constructed such that the film is kept between two transparent platens and is thus maintained in the focussing plane of the optical system, whilst one of said two transparent platens may be manually or automatically subjected to a small displacement, giving a spacing between the platens, which allows film transport.

The use of an optical system for forming a virtual image on a large distance, e.g. a combination of a Fresnel-lens and a small display screen, instead of the normal display screen, allows projection of the image "on infinite distance" at least on a large distance, so that the driver of a vehicle is able, without changing the accommodation condition of his eyes, to switch from viewing the situation on the road to viewing the display screen.

The computing apparatus may also control fixed positions. e.g. changing films, which may be received in cassettes, film transport, film index numbers.

A further possibility of the system according to the invention is a coupling of the system, if necessary having external position sensors for automatic position following instead of manual operation.

The transport of the film may take place by gripping film perforations by means of one or more electro-motors, if desired supplying the desired film index number for automatic film transport.

Furthermore reference is made to two alternatives in relation to the shifting of the display image, namely adjusting the optical projection system relative to the stationary film, or shifting the film, if desired, received in a cartridge, relative to a stationary optical system; also a combination of both alternatives is possible.

The proposed system according to the invention meets practical users' requirements for position information in an ideal manner.

The fact, that a relatively small technical development is necessary to arrive at mass production particularly by means of very simple technology, and that therefore the selling price will be only a fraction of the price of other systems being developed at present, which price is within the financial scope of most vehicle owners, gives the system according to the invention the potential to be manufactured in mass on a large scale and at low costs.

The invention will now be explained with reference to the drawings of some arbitrary embodiments. In the drawing:

Fig. 1 shows a scheme in perspective view of a first embodiment;

Fig. 2 a view corresponding to fig. 1 of a second embodiment;

Fig. 3 a perspective view partially broken away of the interior of a further embodiment;

Fig. 4 a schematic representation of a possible arrangement of three maps of the same region on different scales; and

Fig. 5 a section of an embodiment based on the principle of the embodiment according to fig. 1.

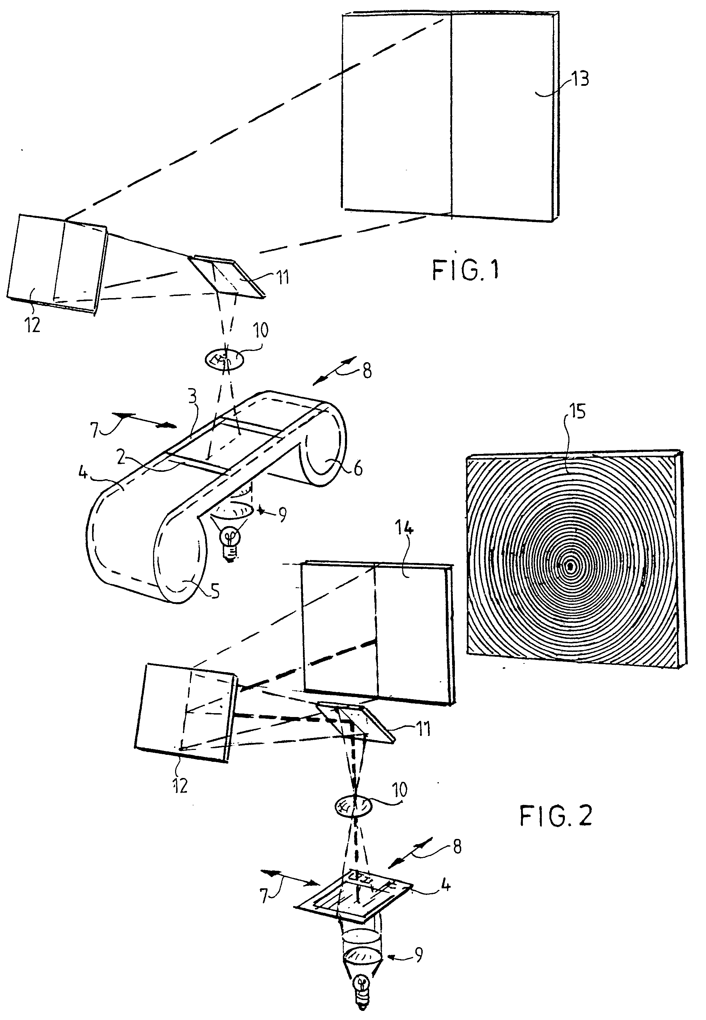

Fig. 1 shows a cartridge 1 comprising two transparent platens 2, 3, between which a transparency film 4 carrying map information is movable between two supply reels 5 and 6. Cartridge 1 is movable in two relatively perpendicular directions in accordance with arrows 7 and 8, respectively. At the one side of the film 4 an illumination device 9 is positioned, whilst at the other side of the film 4 a lens-system 10 (schematically indicated as a single lens) is positioned behind which two mirrors 11, 12, respectively, are arranged for folding the light path and projecting the desired map information on a display screen 13. That display screen 13 may be designed as a ground glass platen, in such a way that a user of the apparatus can observe the display image from the other side.

Fig. 2 shows an alternative. Corresponding elements carry the same reference numerals as in fig. 1. In this embodiment the image is projected on a relatively small display screen 14 and the user can observe that projected image through a positive Fresnel-lens 15 which is arranged at a suitable distance from the projection screen 14. Thus a user can see a virtual image at a large distance through the lens, so that he does not need to accommodate his eyes.

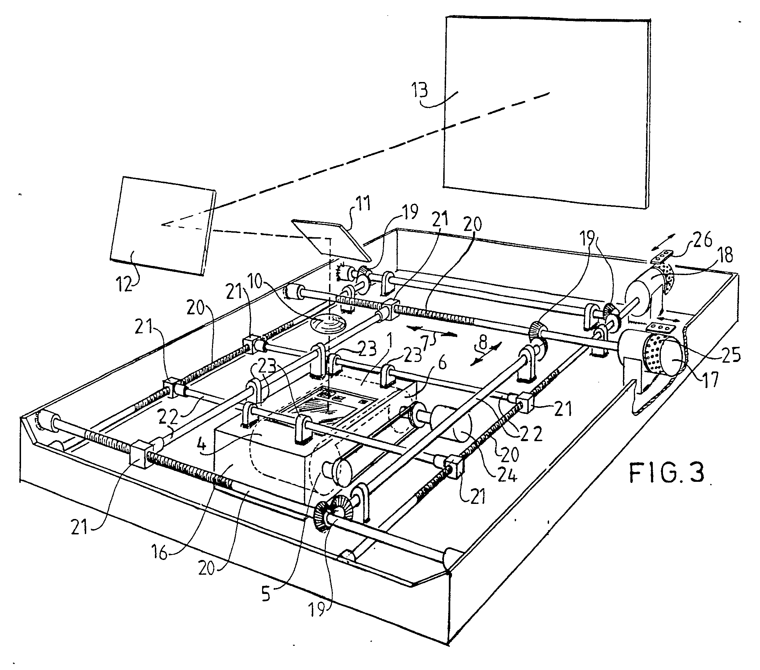

Fig. 3 shows an embodiment on basis of the principle according to fig. 1. In this figure, too, corresponding elements have been referred to with the same reference numerals as in fig. 1.

In the embodiment according to fig. 3 the cartridge is carried by a cartridge housing 16. which is movable by means of two motors 17 and 18, respectively, according to arrows 7 and 8. The motors thereto drive, using transverse transmissions 19 screw spindles 20 on which blocks 21 having through holes provided with corresponding threads are axially movable through rotation. By using gliding bars 22, along which the cartridge housing 16 is movable through eyes 23, the cartridge housing can be moved in two directions 7 and 8.

A motor 24 controls the transport of the film 4.

Motors 17 and 18 are coupled with manually operating means (not shown) for adjusting to the desired part of a map and projection thereof on display screen 13 by means of position transducers 25, 26 arranged in servo-loops.

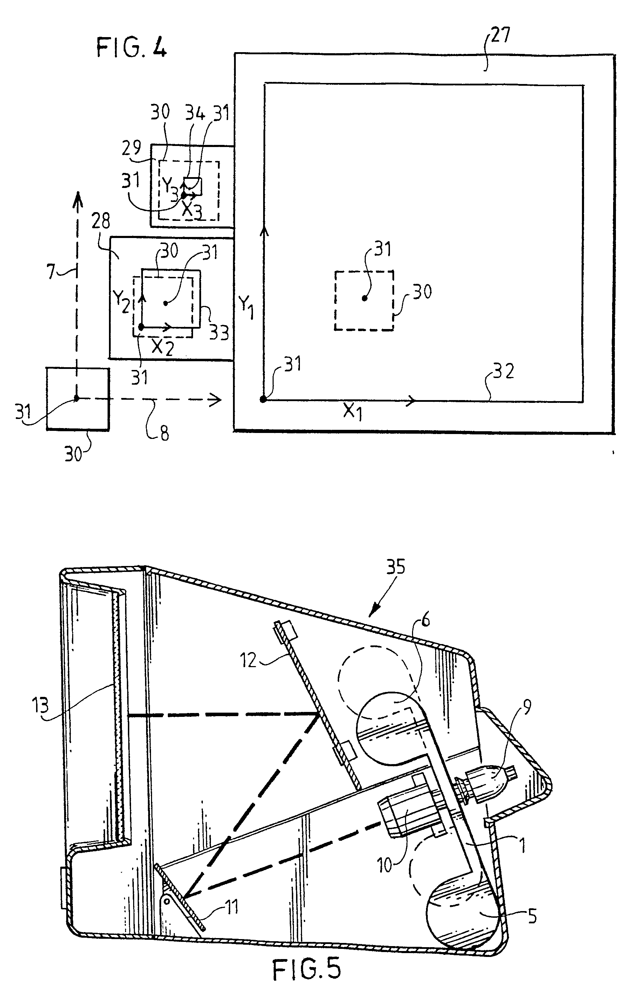

Fig. 4 shows three maps 27, 28, 29, respectively, of the same region, on the scales 1 : 200.000, 1 : 1.000.000 and 1 : 3.000.000, respectively. These maps are carried by a film in transparency form. A framework 30 indicates the scanning area of the lenses-system 10 according to the previous figures. This framework 30 has a square shape and the center is indicated by reference numeral 31. The directions 7 and 8 are indicated relative of this center point as a centre of the coordinates-system. In map 27 the framework 30 is shown again with interrupted lines in order to indicate the part that eventually is visualized, i.e. projected. Close to the left lower corner of map 27 the centre 31 is shown again. Relative to that point another square framework 32 is drawn. This framework 32 is the ultimate limit of the centre 31, passing which causes a black rim to become visible on the displayed image. This is also valid for maps 28 and 29. The related limits, within which the center point 31 may be moved, are indicated here with the frameworks 33, 34, respectively. It will be obvious that the distance between the sides of the ultimate edges of maps 27, 28, 29 and the center point 31 of framework 30 has to be identical for all three maps.

Preferably use will be made of a digital electronic control, through which it is achieved that by means of memories a motor control, indicated in figure 3 as an example can serve for the automatic searching of corresponding positions on the three maps while switching between them by the user.

Fig. 5 shows a section of an apparatus 35, which is a further elaboration of the example schematically indicated in fig. 1. In fig. 5, again, the same reference numerals as in fig. 1 are used for corresponding elements.

With reference to fig. 5 it will be clear that the apparatus 35 may have a compact construction, so that it is well suited for use in a car.

Finally it should be noted that the memory may be an electronic assembly, e.g. in the form of a micro-processor, but also mechanical embodiments may be used.

## Claims

1. System for projecting map information carried by a transparency film, said system comprising:

a carrier for said film, at least two maps of the same area in transparency form being arranged on said film, said maps having preselected relative positions,

an illumination device positioned at the one side of said film, and

an optical projection system positioned at the other side of said film for displaying a part having a previously chosen, fixed area of a map to be chosen, characterized by:

a memory in which the relative positions and the ratios of the scale factors of said maps are stored;

reading means connected to said memory;

hand operating means for adjusting a part of a map to be displayed;

hand-operable switching means for selectively displaying a part of a chosen map and switching to another map, said maps having different scales; and

displacement means controlled by said reading means, said manually operable means and said switching means for relative displacement of said film and said optical projection system, in such a way that when switching from the one map to another map by operating said switching means any position on said one map is uniquely related with the corresponding position on any one of the other maps,

said projection system comprising one single lens unit having a fixed magnification.

2. System according to claim 1, characterized in that said transparency film is received between two transparent platens.

3. System according to claims 1 or 2, characterized in that said film is received in a cassette.

4. System according to claim 2, characterized in that during standstill of the film said film is fixed between said platens and that for transportation of the film the platens are moved at least somewhat away from each other.

5. System according to any one of the preceding claims, characterized in that said optical system is adapted for forming a virtual picture on a large distance.

## Patentansprüche

1. Die Erfindung bezieht sich auf ein System zur Projektion von Karteninformationen, die auf einem transparenten Film enthalten sind, wobei das Sytem folgende Teile umfaßt: einen Träger für den Film; wenigstens zwei Karten der gleichen Gegend, die in Transparentform auf dem Film aufgezeichnet sind, wobei die Karten vorgewählte Relativstellungen haben; eine Projektionslampe auf einer Seite des Films und ein optisches Projektionssystem auf der anderen Seite des Films zur Projektion eines Kartenabschnitts, der eine vorgewählte festgelegte Fläche der zu wählenden Karte aufweist, gekennzeichnet durch die folgenden Merkmale:

einen Speicher, indem die relativen Positionen und die Verhältnisse der Skalierungsfaktoren der Karten gespeichert sind;

eine Lesevorrichtung, die mit dem Speicher verbunden ist;

handbetätigte Mittel zur Einstellung eines Teils einer Karte, der dargestellt werden soll;

handbetätigte Schalter, um selektiv einen Teil einer gewählten Karte darzustellen und um auf eine andere Karte umzuschalten, wobei die Karten unterschiedliche Maßstäbe aufweisen;

und Versetzungsmittel, die durch die Lesevorrichtung gesteuert werden, wobei die manuell betätigten Mittel und die Schalter den Film und das optische Projektionssystem relativ in der Weise versetzen, daß, wenn von einer Karte auf eine andere Karte durch Betätigung des Schalters umgeschaltet wird, jeder Standort auf der einen Karte in eindeutiger Weise auf den entsprechenden Standort in jeder der anderen Karten bezogen ist, wobei das Projektionssystem ein einziges Projektionsobjektiv mit fester Vergrößerung aufweist.

2. System nach Anspruch 1, dadurch gekennzeichnet, daß der transparente Film zwischen zwei transparenten Scheiben liegt.

3. System nach den Ansprüchen 1 oder 2, dadurch gekennzeichnet, daß der Film von einer Kassette aufgenommen ist.

4. System nach Anspruch 2, dadurch gekennzeichnet, daß während des Stillstandes des Films dieser Film zwischen den Scheiben fixiert ist, und daß zum Transport des Filmes die Scheiben ein wenig voneinander weg gespreizt werden.

5. System nach einem der vorhergehenden Ansprüche, dadurch gekennzeichnet, daß das optische System so ausgebildet ist, daß ein virtuelles Bild in einer großen Entfernung entsteht.

## Revendications

1. Système pour projeter une information sous forme de cartes, portée par une pellicule portant des diapositives, ledit système comprenant:

un support pour ladite pellicule, au moins deux cartes de la même zone sous la forme de diapositives étant présentes sur ladite pellicule, lesdites cartes possédant des positions relatives présélectionnées,

un dispositif d'éclairage disposé d'un côté de ladite pellicule, et

un système optique de projection disposé de l'autre côté de ladite pellicule pour l'affichage d'une partie possédant une étendue fixe, préalablement choisie, d'une carte devant être choisie, caractérisé par:

une mémoire, dans laquelle les positions relatives et les rapports des facteurs d'échelle desdites cartes sont mémorisés;

des moyens de lecture connectés à ladite mémoire;

des moyens d'actionnement manuel permettant de régler une partie d'une carte devant être affichée;

des moyens de commutation pouvant être actionnés manuellement pour l'affichage sélectif d'une partie d'une carte choisie et la commutation sur une autre carte, lesdites cartes possédant des échelles différentes; et

des moyens de déplacement commandés par lesdits moyens de lecture, lesdits moyens pouvant être actionnés manuellement et lesdits moyens de commutation pour l'exécution d'un déplacement relatif de ladite pellicule et dudit système de projection, de manière que lors de la commutation d'une première carte à l'autre carte au moyen de l'actionnement desdits moyens de commutation, une position quelconque sur ladite première carte est associée d'une façon unique à la position correspondante sur l'une quelconque des autres cartes,

ledit système de projection comportant une seule unité à lentille possédant un grossissement fixe.

2. Système selon la revendication 1, caractérisé en ce que ladite pellicule portant des diapositives est logée entre deux plaques transparentes.

3. Système selon la revendication 1 ou 2, caractérisé en ce que ladite pellicule est logée dans une cassette.

4. Système selon la revendication 2, caractérisé en ce que, pendant l'arrêt de la pellicule, cette dernière est fixée entre lesdites plaques et que, pour le déplacement de ladite pellicule, les plaques sont écartées l'une de l'autre au moins d'une certaine distance.

5. Système selon l'une quelconque des revendications précédentes, caractérisé en ce que ledit système optique est adapté pour former une image virtuelle sur une grande distance.

FIG.1

FIG.2

EP 0 178 742 B1

FIG.3

FIG. 4

FIG.5